(19) Europäisches Patentamt

European Patent Office

Office européen des brevets

(11) **EP 1 592 246 A1**

(12) **EUROPEAN PATENT APPLICATION**

(43) Date of publication:
02.11.2005 Bulletin 2005/44

(51) Int Cl.7: **H04N 7/01**

(21) Application number: **04010294.9**

(22) Date of filing: **30.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **MATSUSHITA ELECTRIC INDUSTRIAL CO., LTD.**
**Kadoma-shi, Osaka 571-8501 (JP)**

(72) Inventors:
• **Landsiedel, Thilo**
**63110 Rodgau (DE)**
• **Salzer, Sven**
**35510 Butzbach (DE)**

(74) Representative: **Grünecker, Kinkeldey,**
**Stockmair & Schwanhäusser Anwaltssozietät**
**Maximilianstrasse 58**
**80538 München (DE)**

(54) **Film mode determination in video image still areas**

(57)      The present invention enables to correctly maintain image areas in film mode for which film mode detection fails. In particular, unstructured image areas in film mode images do not enable a reliable film mode detection. Accordingly, the border areas of these still image areas suffer from picture quality degradation during picture improvement processing due to application of an inappropriate processing scheme based on the wrong mode determination. The present invention further detects a global film mode indication and employs the detected global motion for the local film mode determination of those image areas for which a local film mode determination fails and still mode has been detected.

Fig. 8

## Description

The present invention relates to an improved picture quality improvement processing. In particular, the present invention relates to a method for determining film mode indications for images of a video sequence and to a corresponding film mode detector.

Picture improvement processing is employed in an increasing number of applications, in particular, in digital signal processing of modern television receivers. Specifically, modern television receivers perform a frame-rate conversion, especially in form of an up-conversion or motion compensated up-conversion, for increasing the picture quality of the reproduced images. Motion compensated up-conversion is performed, for instance, for video sequences having a field or frame frequency of 50 Hz to higher frequencies like 60 Hz, 66.67 Hz, 75 Hz, 100 Hz, etc. While a 50 Hz input signal frequency mainly applies to television signal broadcasts based on the PAL or SECAM television standards, NTSC based video signals have an input frequency of 60 Hz. A 60 Hz input video signal may be up-converted to higher frequencies like 72 Hz, 80 Hz, 90 Hz, 120 Hz, etc.

During up-conversion, intermediate images are to be generated which reflect the video content at positions in time, which are not represented by the 50 Hz or 60 Hz video sequence. For this purpose, the motion of objects has to be taken into account in order to appropriately reflect the changes between subsequent images caused by the motion of objects. The motion of objects is calculated on a block basis, and motion compensation is performed based on the relative position in time of the newly generated image between the previous and subsequent images.

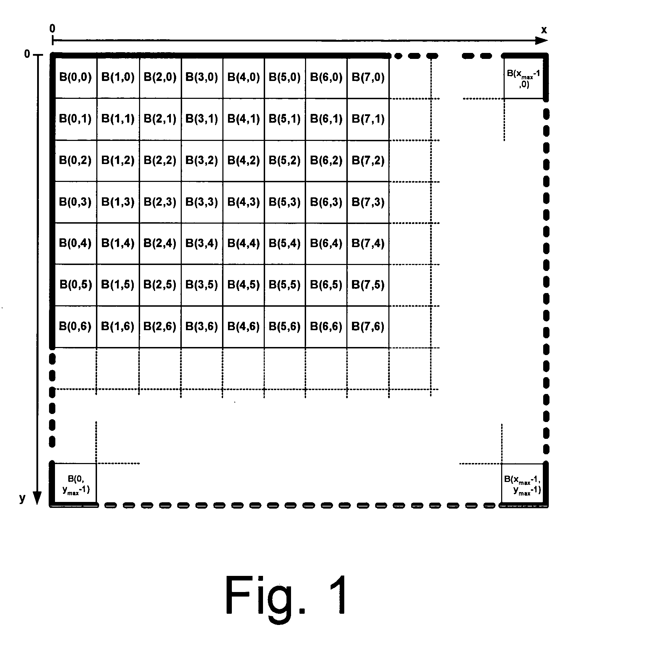

For motion vector determination, each image is divided into a plurality of blocks, as illustrated, for instance, in Fig. 1. Each block is subjected to motion estimation in order to detect a shift of an object from the previous image.

High-end television sets and related devices perform frame rate conversion and image size scaling employing additional information related to the received image data. In addition to motion information, a film mode indication and further supplementary information is supporting the image processing. The film mode indication identifies whether or not the image data stem from a video camera (called "video mode" or "camera mode") or from a motion picture film (called "film mode"). In "video mode", a moving object is represented by different motion phases in each of the images in a video sequence. Thus, video mode can be detected by motion between each of the fields. In "film mode", the images stem from a motion picture to interlaced video data conversion. Such a conversion generates two or three fields from the same film frame such that a particular motion/no motion pattern can be detected.

When performing picture improvement processing, in particular based on motion compensation, the knowledge of the particular motion phase represented by each individual image is required to employ an appropriate processing scheme.

A detection of film mode indications, i.e. whether or not a current image is in video or film mode, is already known, for instance, from EP-A-1 198 137.

In contrast to interlaced video signals like PAL or NTSC signals, motion picture data is composed of complete frames. The most widespread frame rate of motion picture data is 24 Hz (24p). When converting motion picture data for display on a television receiver (this conversion is called telecine), the 24 Hz frame rate is converted into an interlaced video sequence by employing a "pull down" technique.

For converting motion picture film into an interlaced signal conforming to the PAL standard, having a field rate of 50 Hz (50i), a 2-2 pull down technique is employed. The 2-2 pull down technique generates two fields out of each film frame, while the motion picture film is played at 25 frames per second (25p). Consequently, two succeeding fields contain information originating from the same frame and representing the identical temporal position of the video content, in particular of moving objects.

When converting motion picture film into an interlaced signal conforming to the NTSC standard, having a field rate of 60 Hz (60i), the frame rate of 24 Hz is converted into a 60 Hz field rate employing a 3-2 pull down technique. This 3-2 pull down technique generates two video fields from a given motion picture frame and three video fields from the next motion picture frame.

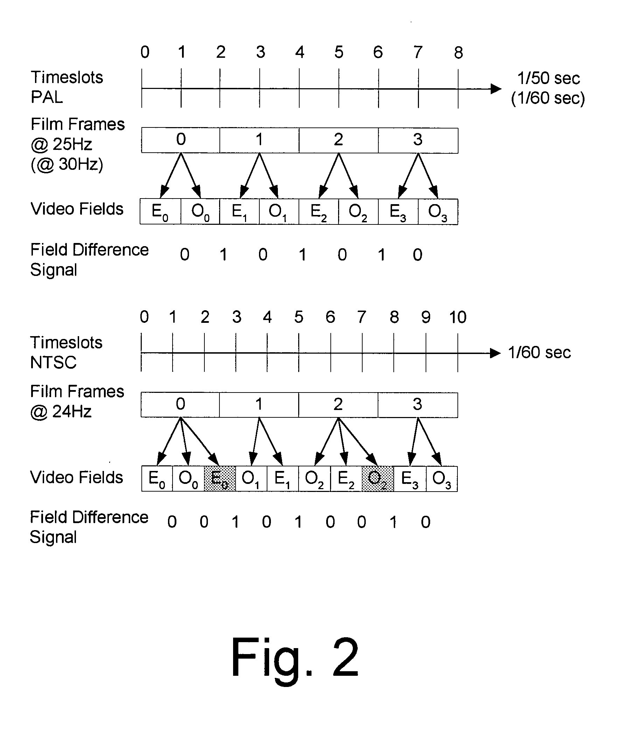

The telecine conversion process for generating interlaced video sequences in accordance with different television standards is illustrated in Fig. 2. The employed pull down techniques result in video sequences which include pairs or triplets of adjacent fields reflecting an identical motion phase. A field difference, for distinguishing a telecine signal from an interlaced image sequence, can only be calculated between fields, which stem from different film frames.

For picture improvement processing, the temporal position reflected by each field in a sequence of interlaced video images does not need to be taken into account if the image content does not include moving objects. However, if moving objects are present in the fields to be processed, the individual motion phase of each field needs to be taken into account. Thus, a picture improvement processing requires information indicating the motion characteristic of the individual fields, i.e. whether each field reflects an individual motion phase or whether a pull down technique has been employed, such that subsequent fields reflect identical motion phases.

In order to enable a picture improvement processing if no motion can be detected between subsequent images, preferably a still mode determination is additionally performed. For this purpose, a still indicator is calculated.

Said picture improvement processing can perform a re-interleaving of odd and even fields upon reception of said still indicator.

The present invention aims to improve the quality of film mode indications associated with image data in order to enable a more appropriate picture quality improvement processing. Thus, it is the object of the present invention to provide an improved method for determining film mode indications and a corresponding film mode detector.

This is achieved by the features of the independent claims.

According to a first aspect of the present invention, a method for determining film mode indications for images of a video sequence is provided. Each video image comprises a plurality of image areas. A global film mode indication is determined for each image of the video sequence based on the detection of motion between subsequent images, wherein the global film mode indication indicates whether each image is in film mode or in video mode. A local film mode indication is determined for each image area based on the detection of motion between corresponding image areas of subsequent images, wherein the local film mode indication indicates whether an image area is in film mode or in video mode. Further, a local still mode indication is determined for each image area based on the detection of motion between corresponding image areas of subsequent images, wherein the local still mode indication indicates whether motion has been detected for that image area.

The local film mode indication of the current image area is determined based on the motion detected for the global film mode indication if still mode has been detected for the current image area.

According to a further aspect of the present invention, a film mode detector for determining film mode indications for images of a video sequence is provided. Each video image comprises a plurality of image areas. The film mode detector comprises a global film mode detector, a local film mode detector, and a local still mode detector. The global film mode detector determines a global film mode indication for each image of the video sequence based on the detection of motion between subsequent images. A global film mode indication indicates whether each image is in film mode or in video mode. The local film mode detector determines a local film mode indication for each image area based on the detection of motion between corresponding image areas of subsequent images. The local film mode indication indicates whether an image area is in film mode or in video mode. The local still mode detector determines a local still mode indication for each image area based on the detection of motion between corresponding image areas of subsequent images. The local still mode indication indicates whether motion has been detected for that image area. The local film mode detector determines the local film mode indication based on the motion detected by the global film mode detector if still mode has been detected for the current image area.

It is the particular approach of the present invention to enable a picture improvement processing with increased picture quality. This is achieved by employing film and still mode indications on a local basis determined for image areas of a video image. In order to increase the reliability of a local film mode indication, a local still mode indication for the current image is determined additionally. If a local film mode determination fails and still mode has been detected for that image area, the local film motion indication of that image area is determined based on the motion between images as detected by the global film mode detection, if global film mode is indicated. In this manner, a local failure of film mode determinations can be bridged. Further, transitions of film mode indications in mixed mode video images, i. e. video images including image areas of different film and video mode indications, can be reliably controlled such that gaps are avoided i.e. film/video mode transitions. In this manner, the application of inappropriate image improvement processing algorithms and a corresponding degradation of the perceived image quality is prevented.

Preferably, the local still mode indication is delayed by a counter, counting subsequent occurrences of a still indicator. Image areas in still mode can be processed accurately and no image information is lost.

Preferably, the determination of local film mode indications is only switched between a film mode and video mode with a delay. Such a delay increases the reliability of film mode indications at the expense of a temporal and spatial offset when detecting new film mode indications. By correcting the film mode indications, the transition between the end of a first film mode indication and the delayed start of a reliably detected new film mode indication can be accurately bridged and an unnecessary switch to video mode is prevented.

According to a preferred embodiment, the delay is implemented by detecting a pre-determined number of new film mode indications for corresponding positions in subsequent images before a new film mode indication is detected. In this manner, the reliability of detected film mode indications is considerably increased.

A local film mode determination is preferably determined based on the detection of a motion bit, which indicates whether or not motion is present between image areas at corresponding positions in subsequent images. The detected motion bits are stored in a FIFO register and the stored motion bits are compared to pre-stored motion patterns. A film mode is detected if a pre-stored pattern is detected within the stored sequence of motion bits. In this manner, a film mode detection is performed in a reliable manner.

Preferably, a global film mode indication is determined by detecting a motion bit indication between subsequent images indicating whether or not motion is present between the images. The detected motion bits are stored in a FIFO register and compared to pre-stored motion patterns. If a pre-stored motion pattern is detected, film mode is determined for the current image. In this manner, a reliable global film mode determination is performed.

Preferably, the pre-stored motion patterns reflect individual motion picture film to interlaced conversion patterns. Most preferably, these conversion patterns include a 2-2 and a 3-2 pull down pattern. In this manner, PAL and NTSC telecine portions are reliably detectable.

A motion bit is preferably detected by calculating absolute pixel differences between corresponding pixels of subsequent images, accumulating the absolute pixel differences, and comparing the accumulation result to a predetermined threshold value. If the accumulation result exceeds the threshold value, motion is detected. Accordingly, motion can be detected in a simple and reliable manner.

Preferably, the still mode indication is a binary value. Most preferably, the still mode indication indicates either a still mode or a motion mode.

Additionally, the film mode indication is a binary value. Most preferably, the film mode indication indicates either a film mode or a video mode.

Although the shape and size of image areas is not limited for the application of the present invention, preferably image areas in form of blocks in a block raster arrangement are used. Accordingly, a simple and reliable processing is enabled.

Preferred embodiments of the present invention are the subject matter of dependent claims.

Other embodiments and advantages of the present invention will become more apparent from the following description of preferred embodiments, in which:

Fig. 1      illustrates a division of a video image into a plurality of blocks of a uniform size,

Fig. 2      illustrates a motion picture film to interlaced video conversion,

Fig. 3      illustrates an example image stemming from a mixed mode image composition from multiple sources,

Fig. 4      illustrates an example configuration for a block based still and film mode detector,

Fig. 5      illustrates the vertical position of pixels in subsequent fields of an interlaced video sequence,

Fig. 6      illustrates an example configuration for detecting still mode,

Fig. 7      illustrates a table of motion phase values and a corresponding motion bit prediction for NTSC and PAL video sequences,

Fig. 8      illustrates an example embodiment of a film motion bit continuation for still areas,

Fig. 9      illustrates an example of a telecine detection result with separate film mode and still mode detections, and

Fig. 10      illustrates a processing result in accordance with the present invention for the example shown in Fig. 9.

The present invention relates to digital signal processing, especially to signal processing in modern television receivers. Modern television receivers employ up-conversion algorithms in order to increase the reproduced picture quality and increase the display frequency. For this purpose, intermediate images are to be generated from two subsequent images. For generating an intermediate image, the motion of objects has to be taken into account in order to appropriately adapt the object position to the point of time reflected by the compensated image.

The present invention is preferably used in display units or image enhancer devices. Video signal processing is inherently necessary to drive progressive displays in order to avoid interlaced line flicker and to reduce large area flicker by employing higher frame rates. Further, the resolution is enhanced for SD (Standard Definition) signals for display on HDTV display devices.

The detection of motion picture film, which was subjected to a telecine process (further referred to as film-mode), is crucial for a picture improvement processing. For instance, an image enhancement may be achieved by interlaced/progressive conversion (I/P). For this purpose, an inverse telecine processing is performed by re-interleaving even and odd fields. In case of a 3-2 pull down conversion (as illustrated in the bottom example of Fig. 2), the single redundant field can be eliminated. The redundant repetition of a video field during 3-2 pull down conversion is marked by the grey coloured fields in Fig. 2.

More advanced up-conversion algorithms employ motion estimation and vector interpolation. The output frame rate may be an uneven fraction of the input frame rate. For instance an up-conversion from 60 Hz to 72 Hz corresponds to a ratio of 5 to 6. During such a conversion, only every 6th output frame can be generated from a single input field, when generating a continuous impression of the motion of a moving object.

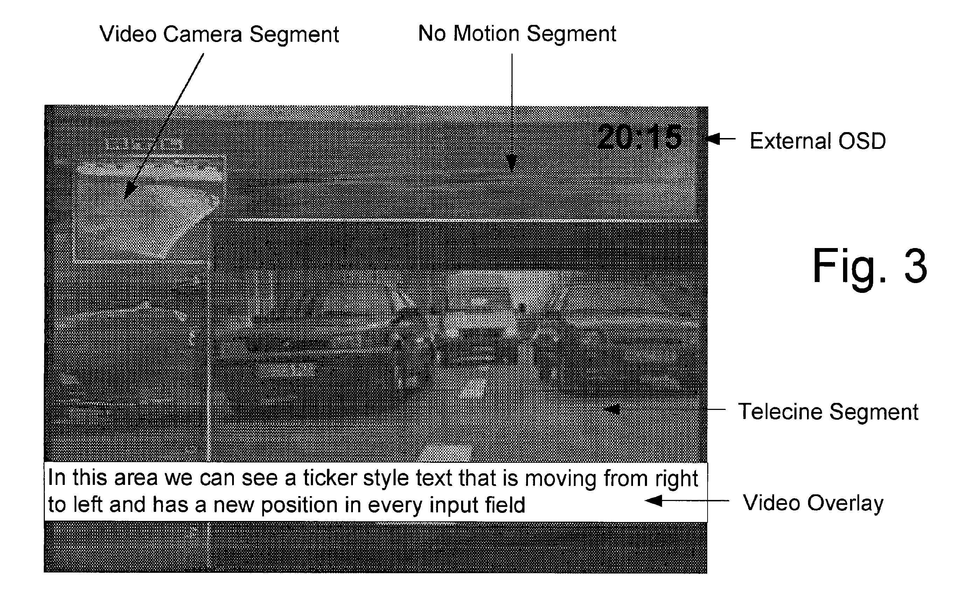

While prior art film mode detectors only evaluate an entire image for film mode detection, the film mode characteristic might, however, differ for different portions within the image. In particular, mixed mode images are composed from video sources providing different types of image data. These mixed mode sequences mainly consist of three types of image content: still or constant areas (e.g. logo, background, OSD), video camera areas (e.g. news ticker, video inserts/overlay), and film mode areas (e.g. main movie, PIP). In particular, new encoding schemes such as MPEG-4 allow a combination of image data originating from different sources within a single re-assembled image as shown, for instance, in Fig. 3 in a simple manner. Thus, a single field may comprise data originating from motion picture film, from a video camera source and/or from computer generated scenes.

Conventional film mode detectors always detect the "predominant mode" covering only the mode present for most of the image portions. Such conventional detectors may cause errors in the reproduced image, as a motion compensator does not take the characteristics of smaller image portions into account. Consequently, a reverse telecine processing applied to a complete image will cause artefacts in those image areas, which do not stem from motion picture film.

Further, a single image may contain image portions originating from a 2-2 pull down of a 30 Hz computer animation and, in addition, a 3-2 pull down segment. If two different types of film mode occur in a single image, the respective image portions have to be processed differently during image improvement processing.

A different processing is also required when image portions stemming from a regular 2-2 pull down and other image portions stemming from an inverse 2-2 pull down are present in the same image, wherein the inverse 2-2 pull down images have an inverse order of the odd and even fields.

In accordance with the present invention each image is divided into a plurality of blocks to perform still and film mode detection on a block basis. Thus, the characteristics of a video sequence are determined on a block basis and a picture improvement processing based thereon can achieve an improved picture quality.

For film and still mode detection, three subsequent raster neutral luminance (Y) input fields are required. Raster neutrality enables a comparison of adjacent fields of opposite parity.

A motion value is calculated based on pixel differences for each of the blocks. A single motion bit indicates whether or not motion has been detected. Based on a sequence of motion bits, a pattern analysis is performed in order to determine the presence and position of a pull down pattern. Upon detecting a pull down pattern, film mode is detected and indicated.

Likewise a still value is calculated for each block and a still bit is derived, indicating no motion of the current image block. A sequence of still bits is analysed for the continuous state of no motion and upon this still mode can be indicated.

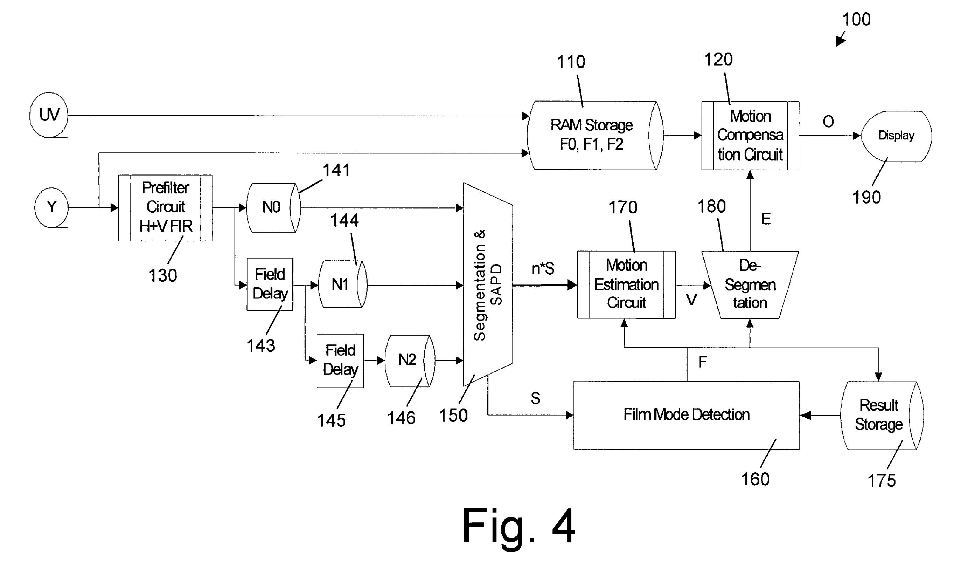

An example configuration for a block based film mode detector is illustrated in Fig. 4. The luminance information Y of the input video signal is passed through a pre-filter circuit 110 generating a raster neutral, low pass filtered image signal N0. The prefiltering prevents vertical differences caused by different raster positions of subsequent fields to be misinterpreted as motion. The pre-filtered luminance component N0 is stored in memory 121, delayed twice by field delay means 122, 124 and stored as image signal N1 delayed by one field period in memory 123 and as image signal N2 delayed by two field periods in memory 125.

The input image is divided into a plurality of blocks in accordance with the predefined block raster as illustrated, for instance, in Fig. 1. Preferably, each image comprises 90 blocks in horizontal direction and 60 blocks for NTSC video sequences and 72 blocks for PAL video sequences in vertical direction.

Between blocks at corresponding positions in subsequent images, a sum of absolute pixel differences SAPD is calculated. Depending on the accumulation result, motion is detected to be present between two subsequent blocks.

The image block raster and the calculation of absolute pixel differences is performed in unit 130. Three SAPD values are calculated for identical block positions between image data of fields N0 and N1, N1 and N2 and in addition, between fields N0 and N2.

The calculated SAPD values for identical block positions are applied to film mode detection unit 140 and still mode detection unit 150. The latter compares the SAPD values to an adaptive threshold and if the SAPD value falls below, a still bit is set. Film mode detection unit 140 respectively compares the accumulated differences to an adaptive threshold. Depending on the comparison result, a motion bit is set to 1 if the threshold is exceeded and motion detected, otherwise to 0.

The threshold values to be compared with the SAPD motion values for motion detection are set to a value based on the image content. In this manner, small SAPD motion values are taken into account and evaluated based on a relative motion difference.

The still bits determined from blocks of subsequent fields at a corresponding position increment a counter if the bit is set or decremented if the bit is reset (cf. 410). The counter value is compared to an adjustable delay value, and the comparison result determines the still mode of the current block.

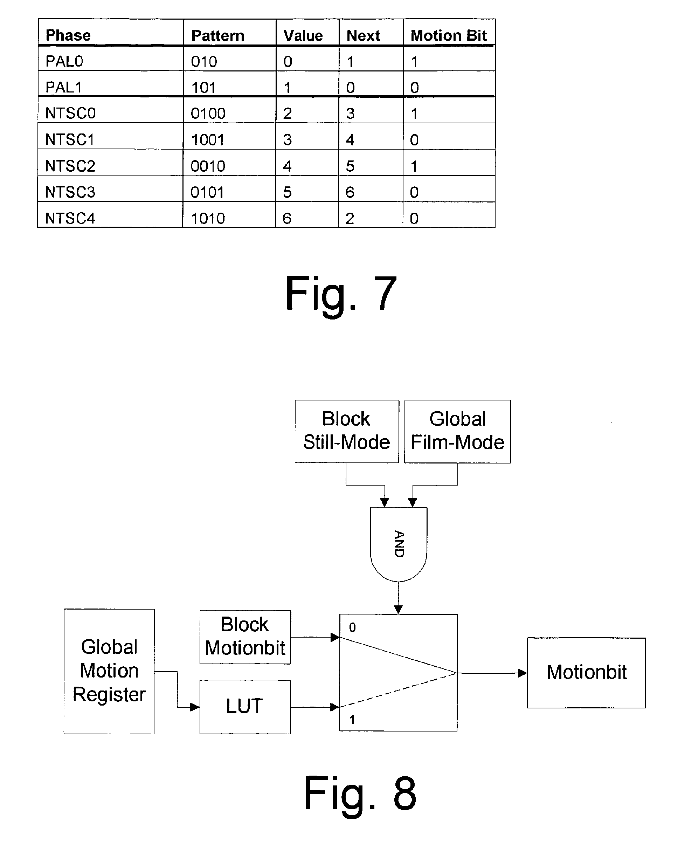

The motion bits determined from said blocks are queued into a motion register. If the current block is determined as still then no motion bit will be found. If in addition a global film mode has been detected for the last image, then the next global motion bit is derived by means of a Look-up-table (Fig.7) from the global motion register and queued into the local motion register (M). If a motion bit is determined for a current block the still counter is reset immediately (cf. 410) and therefore resets the still mode. This prevents any blocks from remaining in still mode if film like motion has been detected and prevent motion artefacts from wrong image processing.

Further, the local motion register is compared to pre-stored typical telecine patterns like 101 or 10010. If a telecine pattern is detected, film mode is determined for the respective image block. If not, the respective image block is determined to be in video mode.

The determined film mode indication (F) and still mode indication (S), along with still counter value and motion register are stored for each block and are provided to memory 145 for use during determination of subsequent images and for use with an attached up-conversion unit.

The video signal applied to the film mode detector of the present is preferably in accordance with the CCIR-601 standard format YUV-4:2:2. For film and still mode detection, three subsequent raster neutral luminance (Y) input fields are required. Raster neutrality enables a comparison of adjacent fields of opposite parity.

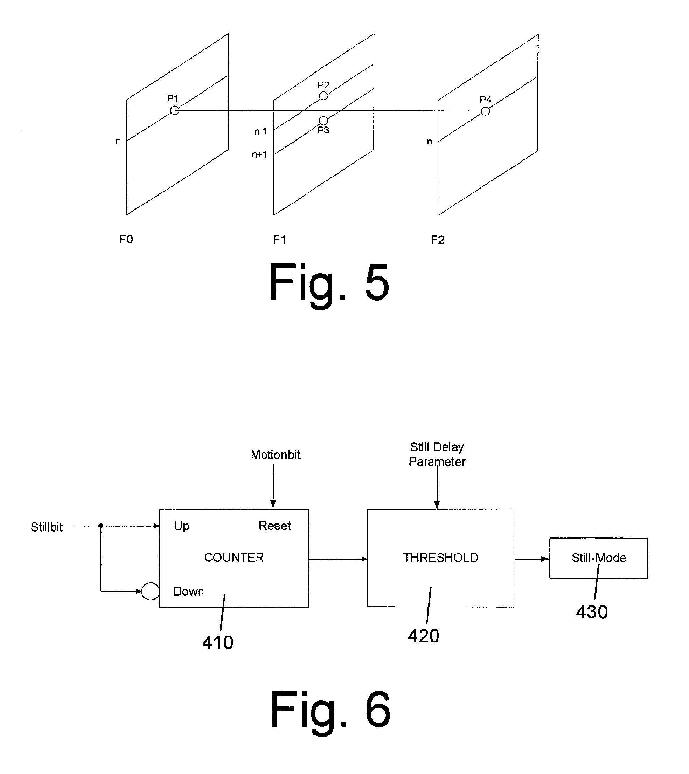

As illustrated in Fig. 5, the even and odd lines of neighbouring fields contain image information at different vertical positions (P1 and P4 as opposed to P2 and P3), which may result in a miss-detection of motion. In order to avoid such motion miss-detection, a raster neutral position is calculated in advance by interpolating even fields to a half line downwards shifted vertical position and odd fields to a half line upwards shifted position.

The block size of m*n pixels is adapted to the image format. Preferably, the block is rectangular wherein the number of pixels in horizontal direction is twice as large as the number of pixels in vertical direction. For instance, a block may have a block size of 8*4 pixels. It is to be noted that after interlaced/progressive conversion, the rectangular block size will adopt a square format.

In order to enable a picture improvement processing if no motion can be detected between subsequent images, preferably a still mode determination is additionally performed. For this purpose, a still indicator is calculated. An example configuration of a still mode detector is illustrated in Fig. 6.

The luminance information Y of the input video signal is passed through a prefiltering circuit to generate raster neutral, low-pass image N0. The image signal N0 is delayed by one field period into field N1, and further delayed by another field period for image signal N2. In this manner, vertical transitions are not misinterpreted as motion and sequential fields may be compared to each other.

A sum of absolute pixel differences, SAPD is calculated for each image block, namely between image blocks of fields N0/N2, N1/N2 and N0/N2. The block size employed is identical to the block size employed for film mode detection. The SAPD of a block is calculated by subtracting the pixel values P of two adjacent fields for the same spatial positions XY, inverting negative difference values, and accumulating the differences for a whole block.

In order to eliminate the influence of video noise, only differences are allowed to contribute to the accumulated absolute pixel difference, which exceed a predefined pixel threshold PT. The following equation expresses the accumulation performed for an image area in subsequent fields NO and N1:

$$SAPD_{01} = \sum_{x=0}^{2m} \sum_{y=0}^{2n} \left( \left| P_{x,y}(N0) - P_{x,y}(N1) \right| \right) \quad if \left| P(N0) - P(N1) \right| > PT$$

Respective SAPD values are also calculated between fields N1/N2 and between fields N0/N2.

In order to avoid that image details are part of adjacent blocks and processed differently, the block size is preferably enlarged in order to take image details of neighbouring blocks into account for film mode determination. Preferably, the block dimensions are doubled in both, vertical and horizontal direction such that a block size of 2m*2n is employed for calculation and assigned to the physical block dimension of m*n.

A motion value $SAPD_{02}$ represents a frame motion between fields N0 and N2. Such a frame motion value is calculated based on pixels at identical vertical pixel positions (in contrast to directly adjacent fields). Such a difference value does not contain any influence from a vertical offset due to the interlaced field structure. For determining the presence of no-motion, such a difference is preferably compared to a previous frame motion difference $SAPD_{13}$. However, due to memory restrictions generally only the two intermediate field motion values are available, namely motion values $SAPD_{01}$ and $SAPD_{12}$. To eliminate a contribution to the motion values SAPD from the field structure, the motion values $SAPD_{01}$ and $SAPD_{12}$ are subtracted to yield an equivalent of an intermediate frame motion.

In order to achieve a reliable and robust indication, the field difference calculated between motion values $SAPD_{01}$ and $SAPD_{12}$ is multiplied with a pre-determined quantisation operator QS. The still bit determination is accordingly performed in accordance with the following equation:

$$Stillbit = (SAPD_{02} < QS * |SAPD_{01} - SAPD_{12}|)$$

The pre-determined quantisation operator QS preferably has a value between 0 and 2. If the frame motion value is smaller than the threshold, a still image condition is determined and a still bit is set.

A still mode detection is based on the above determined still bit sequence, which is evaluated by a still mode detector, the configuration of which is illustrated in Fig. 6. The still bit increments a counter 410 if the still bit is set. Otherwise, counter 410 is decremented. When the count value exceeds a pre-determined threshold 420, still mode is detected and stored for the respective image area.

Based on the still mode detection result, a motion compensation and interpolation device can apply a re-interleaving of subsequent fields F0 and F1 in order to achieve an improved image quality based on a progressive image format.

In addition to the local characteristics of a video image, namely film mode and still mode, the present invention suggests to additionally calculate a global film mode indication. If the global film mode indication for current image is film mode, it is very likely that the entire image is in film mode. If some image areas of that image are detected in still mode, the motion register of these image areas do not have any detected motion bits. In accordance with the present invention, the motion bits for these image areas are derived from the global motion register by means of a LUT, only if global film mode has been detected for the previous image.

In particular, the present invention enables to overcome the following problem discussed in conjunction with Fig.8. A problem occurs when an image area is in transition from still mode to film mode. The detection of film mode is delayed in order to increase the detection reliability. This causes an undesired and badly compensated gap which is in video mode while the modes adjacent to this gap are in still and film mode. As film mode would be detected for a film mode image, the motion register in these still areas is continued with the motion bits from the global motion register look-up-table LUT.

In accordance with the present invention, the motion pattern for film mode portions remains uninterrupted. The introduction of a video mode gap is efficiently prevented during a transition from still mode to film mode. Accordingly, borders of still mode image areas in a film mode video image can be reproduced correctly, in particular with improved picture quality. Further, the bit matrix of film mode indications is rendered more homogeneous.

Generally, a global motion bit is not present for the current image, but only for the previous images. According to a preferred embodiment, but not limited thereto, the present invention predicts the global motion bit for the current image from the global motion register (cf. Fig.7). The motion phase is continued based on the previously detected pull-down pattern.

For a reliable pull down detection, two motion phases need to be detected for PAL 2-2 pull down conversions, while five motion phases are needed for detecting a NTSC 3-2 pull-down pattern. A concurrent detection of both types consequently requires the evaluation of seven subsequent motion phases.

A prediction of a film mode motion phase is achieved by incrementing the current motion phase value in accordance with the detected pull-down pattern. The prediction is preferably preformed in accordance with a look-up-table LUT as illustrated in Fig. 6. Fig. 6 lists all PAL and NTSC motion phases based on a detected motion pattern. Based thereon, a motion phase value may be wrapped around inside the pull-down pattern.

An accordingly continued motion bit for a still area is calculated in accordance with the configuration shown in Fig. 8. The predicted motion bit is queued into the motion register of the current block. In this manner, the local film mode detection is enabled by continuing a motion bit detected in a different manner.

The motion bit for the local film mode register is selected via a switch from two alternatives. One is the local determined block motion bit. The other is the motion bit read from a LUT according to Fig.7 from which the entry is selected that corresponds to the global motion register. The latter alternative is selected if the block is in still mode and global film mode is indicated.

In this manner, the present invention operates as follows. When still mode is detected for a current block (included in a film mode image), motion has not been detected for this block. Accordingly, the motion register only includes zeros. If however a global film mode indication indicating film mode is detected for the current image, the respective motion bit is inserted into the motion register of the current block. Consequently, film mode can be detected for the current block, although the current block does not enable any motion detection.

In this manner, unstructured image areas in a film mode image or image portion do not result in a video mode gap. The block will remain in film mode. Accordingly, a picture quality improvement processing can be successfully performed for sharp contoured objects, like (non-structured) pillars, which move across a scene.

Even if image blocks are set to film mode in accordance with the present invention, mode would be the correct determination and is indicated concurrently. The additional indication of film mode does not adversely affect a picture quality improvement processing. This processing can employ for example a priority circuit to prefer still over film mode.

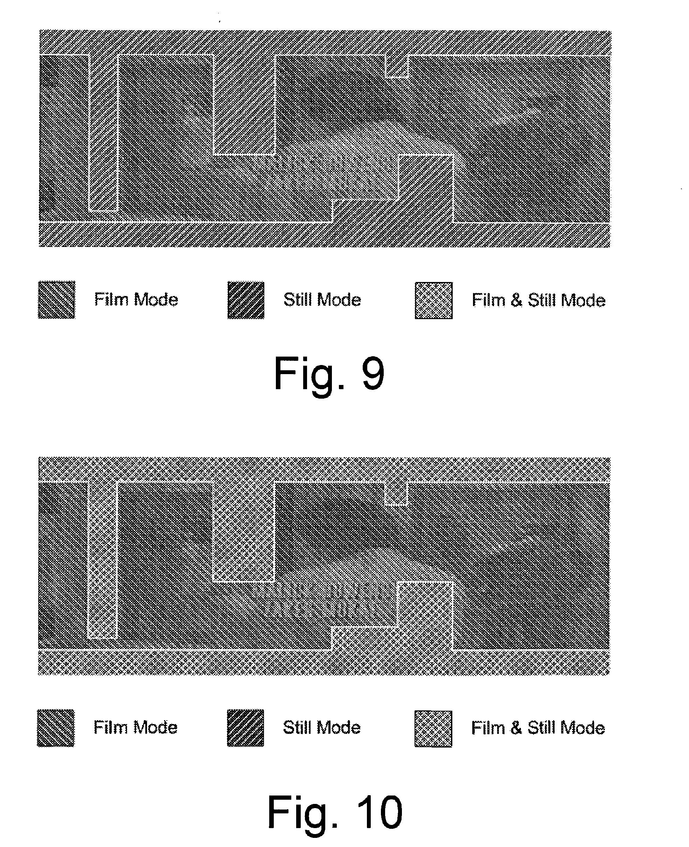

An example for applying the present invention is illustrated in Fig. 9 and Fig. 10. While Fig. 9 illustrates the detection of still areas, which are set to video mode in a film mode image, these image areas are additionally set to film mode as illustrated in Fig. 10.

Summarizing, the present invention enables to correctly maintain image areas in film mode for which film mode detection fails. In particular, unstructured image areas in film mode images do not enable a reliable film mode detection. Accordingly, the border areas of these still image areas suffer from picture quality degradation during picture improvement processing due to application of an inappropriate processing scheme based on the wrong mode determination. The present invention further detects a global film mode indication and employs the detected global motion for the local film mode determination of those image areas for which a local film mode determination fails and still mode has been detected.

## Claims

1. A method for determining film mode indications for images of a video sequence, each video image comprising a plurality of image areas, the method comprising the steps of:

   determining a global film mode indication for each image of the video sequence based on the detection of motion between subsequent images, said global film mode indication indicating whether each image is in film mode or in video mode,

   determining a local film mode indication for each image area based on the detection of motion between corresponding image areas of subsequent images, said film mode indication indicating whether an image area is in film mode or in video mode,

   determining a local still mode indication for each image area based on the detection of motion between corresponding image areas of subsequent images, said still mode indication indicating whether motion has been detected for that image area,

   wherein said local film mode indication of the current image area is determined based on the motion detected for said global film mode indication if still mode has been detected for the current image area.

2. A method according to claim 1, wherein said local film mode determination comprising the steps of:

   detecting a motion bit indicating whether or not motion is present between image areas at corresponding positions in subsequent images,

   storing the detected motion bits in a FIFO register,

   comparing the stored motion bits with prestored motion patterns, and

   determining film mode if a prestored pattern is detected.

3. A method according to claims 1 or 2, wherein said global film mode determination comprising the steps of:

   detecting a motion bit indication whether or not motion is present between subsequent images,

   storing the detected motion bits in a FIFO register,

   comparing the stored motion bits with prestored motion patterns, and

   determining film mode if a prestored pattern is detected.

4. A method according to claim 3, wherein said local film mode determination is based on the motion bits determined during said global motion determination if still mode has been detected for the current block.

5. A method according to claim 4, wherein a current motion bit for said local film mode determination is obtained in accordance with a predetermined rule from said motion bits determined for said global motion determination.

**6.** A method according to claim 5, wherein said motion bit provided to said local film mode determination is obtained from a look-up-table.

**7.** A method according to any of claims 2 to 6, wherein said prestored motion patterns reflect individual motion picture film-to-interlaced conversion patterns.

**8.** A method according to claim 7, wherein said motion picture film-to-interlaced conversion patterns include a 2-2 and/or a 3-2 pull down pattern.

**9.** A method according to any of claims 2 to 8, wherein said step of detecting a motion bit comprises the steps of:

calculating absolute pixel differences between corresponding pixels of said subsequent images,

accumulating said absolute pixel differences,

comparing said accumulation result to a predetermined threshold value, and

determining the presence of motion if said accumulation result exceeds said threshold value.

**10.** A method according to any of claims 1 to 9, wherein said film mode indication being a binary value.

**11.** A method according to any of claims 1 to 10, wherein said still mode is determined if not motion is detected for a predetermined number of subsequent images.

**12.** A method according to any of claims 1 to 11, wherein said video images comprising a plurality of image areas in form of blocks in a block raster arrangement.

**13.** A method for performing a motion compensated image processing of a video sequence, comprising the steps of:

determining film mode indications for a video sequence in accordance with any of claims 1 to 12, and

performing a motion compensated image processing based on the determined film mode indications.

**14.** A film mode detector for determining film mode indications for images of a video sequence, each video image comprising a plurality of image areas, comprising:

a global film mode detector for determining a global film mode indication for each image of the video sequence based on the detection of motion between subsequent images, said global film mode indication indicating whether each image is in film mode or in video mode,

a local film mode detector for determining a local film mode indication for each image area based on the detection of motion between corresponding image areas of subsequent images, said local film mode indication indicating whether an image area is in film mode or in video mode, and

a local still mode detector for determining a local still mode indication for each image area based on the detection of motion between corresponding image areas of subsequent images, said still mode indication indicating whether motion has been detected for that image area,

wherein said local film mode detector determines said local film mode indication of the current image area based on the motion detected for said global film mode indication if still mode has been detected for the current image area.

**15.** A film mode detector according to claim 14, wherein said local film mode detector comprising:

a motion bit detector for detecting a motion bit indicating whether or not motion is present between image areas at corresponding positions in subsequent images,

a FIFO register for storing the detected motion bits, and

a comparator for comparing the stored motion bits with prestored motion patterns and for determining film mode if a prestored pattern is detected

**16.** A film mode detector according to claim 14 or 15, wherein said global film mode detector comprising:

a motion bit detector for detecting a motion bit indicating whether or not motion is present between subsequent images,

a FIFO register for storing the detected motion bits, and

a comparator for comparing the stored motion bits with prestored motion patterns and for determining film mode if a prestored pattern is detected.

**17.** A film mode detector according to claim 16, wherein said local film mode detector employing a motion bit determined by said global motion detector.

**18.** A film mode detector according to claim 17, further comprising a switch means for selecting either a currently determined local motion bit or a motion bit based on the detected global motion.

**19.** A film mode detector according to claim 17 or 18, further comprising a look-up-table for outputting a motion bit based on the received global motion bit sequence.

**20.** A film mode detector according to any of claims 15 to 19, wherein said prestored motion patterns reflect individual motion picture film-to-interlaced conversion patterns.

**21.** A film mode detector according to claim 20, wherein said motion picture film-to-interlaced conversion patterns include a 2-2 and/or a 3-2 pull down pattern.

**22.** A film mode detector according to any of claims 15 to 21, wherein said motion bit detector comprising:

a calculator for calculating absolute pixel differences between corresponding pixels of said subsequent images,

an accumulator for accumulating said absolute pixel differences, and

a comparator for comparing said accumulation result to a predetermined threshold value and for determining the presence of motion if said accumulation result exceeds said threshold value.

**23.** A film mode detector according to any of claims 14 to 22, wherein said film mode indication being a binary value.

**24.** A film mode detector according to any of claims 14 to 23, wherein said still mode detector determining still mode if not motion is detected for a predetermined number of subsequent images.

**25.** A film mode detector according to any of claims 14 to 24, wherein said video images comprising a plurality of image areas in form of blocks in a block raster arrangement.

**26.** A motion compensator for performing a motion compensated image processing of a video sequence, comprising:

a film mode detector in accordance with any of claims 14 to 25, and

an image processor for performing a motion compensated image processing based on the determined film mode indications.

| B(0,0) | B(1,0) | B(2,0) | B(3,0) | B(4,0) | B(5,0) | B(6,0) | B(7,0) | | | | B($x_{max}$-1,0) |
| B(0,1) | B(1,1) | B(2,1) | B(3,1) | B(4,1) | B(5,1) | B(6,1) | B(7,1) |
| B(0,2) | B(1,2) | B(2,2) | B(3,2) | B(4,2) | B(5,2) | B(6,2) | B(7,2) |
| B(0,3) | B(1,3) | B(2,3) | B(3,3) | B(4,3) | B(5,3) | B(6,3) | B(7,3) |
| B(0,4) | B(1,4) | B(2,4) | B(3,4) | B(4,4) | B(5,4) | B(6,4) | B(7,4) |
| B(0,5) | B(1,5) | B(2,5) | B(3,5) | B(4,5) | B(5,5) | B(6,5) | B(7,5) |
| B(0,6) | B(1,6) | B(2,6) | B(3,6) | B(4,6) | B(5,6) | B(6,6) | B(7,6) |
| B(0,$y_{max}$-1) | | | | | | | | | | | B($x_{max}$-1, $y_{max}$-1) |

# Fig. 1

Fig. 2

Video Camera Segment

No Motion Segment

20:15 ← External OSD

Fig. 3

Telecine Segment

In this area we can see a ticker style text that is moving from right to left and has a new position in every input field ← Video Overlay

EP 1 592 246 A1

Fig. 4

FO      F1      F2

# Fig. 5

Motionbit

Still Delay
Parameter

Stillbit

Up   Reset

COUNTER

Down

THRESHOLD

Still-Mode

410

420

430

# Fig. 6

| Phase | Pattern | Value | Next | Motion Bit |
|-------|---------|-------|------|------------|
| PAL0 | 010 | 0 | 1 | 1 |
| PAL1 | 101 | 1 | 0 | 0 |
| NTSC0 | 0100 | 2 | 3 | 1 |
| NTSC1 | 1001 | 3 | 4 | 0 |
| NTSC2 | 0010 | 4 | 5 | 1 |
| NTSC3 | 0101 | 5 | 6 | 0 |
| NTSC4 | 1010 | 6 | 2 | 0 |

# Fig. 7

# Fig. 8

| | Film Mode | | Still Mode | | Film & Still Mode |

## Fig. 9

| | Film Mode | | Still Mode | | Film & Still Mode |

## Fig. 10

**European Patent Office**

**EUROPEAN SEARCH REPORT**

Application Number

EP 04 01 0294

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 02/056597 A (KONINKLIJKE PHILIPS ELECTRONICS) 18 July 2002 (2002-07-18)<br><br>* abstract *<br>* page 2, line 6 - page 3, line 7 *<br>* page 7, line 3 - line 24 *<br>* page 12, line 3 - line 8 *<br>----- | 1,2,7,8, 10, 13-15, 20,21, 23,26 | H04N7/01 |
| A | US 2003/098924 A1 (ADAMS ET AL.) 29 May 2003 (2003-05-29)<br><br>* abstract; figures 14,16 *<br>paragraphs [0059], [0063], [0064] and [0071]<br>----- | 1,3, 7-11,13, 14,16, 20-24,26 | |
| A | WO 99/16251 A (KONINKLIJKE PHILIPS ELECTRONICS) 1 April 1999 (1999-04-01)<br>* page 1, line 5 - page 2, line 34 *<br>* page 4, line 4 - page 6, line 11 *<br>* page 9, line 11 - page 12, line 8 *<br>* page 14, line 31 - page 15, line 4 *<br>* page 21, line 34 - page 23, line 10 *<br>----- | 1,13,14, 26 | |
| A | US 2003/156301 A1 (KEMPF ET AL.) 21 August 2003 (2003-08-21)<br>paragraphs [0068] and [0080]<br>----- | | |

TECHNICAL FIELDS SEARCHED (Int.Cl.7)

H04N

The present search report has been drawn up for all claims

| Place of search | Date of completion of the search | Examiner |
|---|---|---|
| The Hague | 14 January 2005 | Berwitz, P |

EPO FORM 1503 03.82 (P04C01)

**ANNEX TO THE EUROPEAN SEARCH REPORT
ON EUROPEAN PATENT APPLICATION NO.**

EP 04 01 0294

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2005

| Patent document cited in search report | | Publication date | Patent family member(s) | | Publication date |
|---|---|---|---|---|---|
| WO 02056597 | A | 18-07-2002 | CN | 1456015 T | 12-11-2003 |
| | | | EP | 1352528 A1 | 15-10-2003 |
| | | | WO | 02056597 A1 | 18-07-2002 |
| | | | JP | 2004518341 T | 17-06-2004 |
| | | | US | 2002131499 A1 | 19-09-2002 |
| US 2003098924 | A1 | 29-05-2003 | AU | 1068899 A | 27-04-1999 |
| | | | CA | 2305368 A1 | 15-04-1999 |
| | | | EP | 1013089 A1 | 28-06-2000 |
| | | | JP | 2002528931 T | 03-09-2002 |
| | | | US | 2002136540 A1 | 26-09-2002 |
| | | | WO | 9918727 A1 | 15-04-1999 |
| | | | US | 6380978 B1 | 30-04-2002 |
| WO 9916251 | A | 01-04-1999 | EP | 0940041 A1 | 08-09-1999 |
| | | | EP | 0943209 A1 | 22-09-1999 |
| | | | WO | 9916251 A1 | 01-04-1999 |
| | | | WO | 9916248 A1 | 01-04-1999 |
| | | | JP | 2001506472 T | 15-05-2001 |
| | | | JP | 2001506473 T | 15-05-2001 |
| | | | US | 6385245 B1 | 07-05-2002 |
| US 2003156301 | A1 | 21-08-2003 | NONE | | |